# FASCICULE DE BREVET EUROPEEN

(11) **EP 1 647 192 B1**
(45) Date de publication et mention de la délivrance du brevet: **14.08.2019**
(21) Numéro de dépôt: 05291872.9
(22) Date de dépôt: 09.09.2005
(51) Int. Cl.: A21D 13/32

(54) **Procédé de fabrication d'un produit alimentaire composite, et produit alimentaire**
Verfahren zur Herstellung einem Kompositnahrungsmittel
Process for the preparation of a composite food product

(30) Priorité: 15.09.2004 FR 0452057
(43) Date de publication de la demande: 19.04.2006
(73) Titulaire: BONGRAIN S.A., 78220 Viroflay (FR)
(72) Inventeur: Couraud, Pascal, 24750 Champcevinel (FR); Martin-Rouas, Christine, 78590 Noisy Le Roi (FR); Queric, Marie-Pierre, 24000 Periqueux (FR)
(74) Mandataire: Novagraaf Technologies

(56) Documents cités:
- EP-A- 0 893 061
- WO-A-99/02039
- CA-A1- 2 292 416
- FR-A- 2 691 130
- FR-A- 2 769 471
- GB-A- 2 335 133
- US-A1- 2003 008 037

## Description

En particulier, l'invention a trait à un procédé de fabrication d'un produit salé comprenant une pâte de type pain et une garniture de type fromage.

Or, dans ce type de produits alimentaires, l'un des problèmes majeurs qui se pose est la migration d'eau du fromage vers le pain, phénomène lié à l'Aw (activité de l'eau) respective du fromage et du pain, l'Aw du fromage étant supérieure à celle du pain. Ceci conduit d'une part à un ramollissement du pain et d'autre part à un assèchement du fromage, donc à une baisse des qualités organoleptiques du produit. Ce problème est d'autant plus important dans le cas de préparations fromagères, particulièrement riches en eau.

Différentes solutions ont été proposées pour pallier ce problème.

Tout d'abord, le document WO 99/02039 décrit un produit alimentaire composite qui comprend une pâte fourrée de fromage. Toutefois, ce produit est conditionné sous forme précuite, et non totalement cuite, et il doit être réchauffé avant consommation. Du fait de la conservation sous forme précuite et du réchauffage ultérieur, la migration d'eau du fromage vers la pâte est limitée. De plus, le réchauffage permet d'assécher le pain. Mais il existe une demande croissante des consommateurs pour les produits alimentaires pouvant être directement consommés, par exemple immédiatement après achat, en dehors du domicile. Ce produit alimentaire n'est donc pas pleinement satisfaisant.

Par ailleurs, le document GB 2 331 225 décrit un produit alimentaire composite comprenant une pâte type « gâteau de Savoie » et une garniture de crème fromagère. Afin de limiter les migrations d'eau entre la garniture et la pâte, ce document prévoit d'abaisser l'Aw de la garniture. Il en résulte que la garniture perd son caractère frais et moelleux, ce qui nuit à la texture et au goût du produit fini. Cela est d'autant plus gênant pour les garnitures de type préparations fromagères. En outre, l'abaissement de l'Aw de la garniture conduit à des produits gras, présentant des défauts organoleptiques et nutritionnels importants.

On connaît également, du document FR-A-2 769 471, un produit alimentaire composite, à goût salé, comportant :
- un biscuit classique comprenant les ingrédients suivants : eau, farine de boulangerie/pâtisserie, oeuf, sel, conservateur ;
- et un fourrage constitué de fromage fondu déposé à chaud sur le biscuit et dans lequel les échanges d'eau entre le fourrage et le biscuit sont limités. Mais ce document ne concerne qu'un produit alimentaire spécifique à base de biscuit et fromage fondu.

Le document FR-A-2 691 130 décrit un produit alimentaire constitué d'un pain fourré. Cependant rien n'est dit sur les taux d'humidité respectifs des garnitures, ni sur le problème de la migration de l'eau de la garniture vers le pain.

Le document US 2003/008037 décrit un sandwich comprenant une tranche de pain pourvue d'une cavité centrale dans laquelle est déposée une couche de fromage. Toutefois, ce sandwich est destiné à être conservé sous forme congelée et le problème de la migration de l'eau ne se pose pas car le fromage est appliqué sous forme solide.

Le but de l'invention est de réaliser un produit alimentaire composite de type snack salé, comportant d'une part un produit de type pain, notamment de type pain de mie ou pain viennois, et d'autre part une garniture de type fromager telle qu'une préparation fromagère, ce produit alimentaire composite étant apte à être conservé au froid pendant une durée d'au moins 45 jours, et directement consommable.

A cet effet, l'invention propose un procédé de fabrication d'un produit alimentaire composite comprenant les étapes consistant à :
- former un produit de type pain par cuisson d'une pâte, la composition de la pâte étant telle que, après cuisson, le pain présente une Aw (activité de l'eau) supérieure à 0,90 et un taux d'humidité compris entre 25 et 50 %, et refroidir ledit produit de pain ;
- former une garniture de type préparation fromagère, présentant une Aw supérieure à 0,95 et un taux d'humidité compris entre 40 et 70 %, et refroidir ladite garniture ;
caractérisé en ce que, le procédé comporte en outre des étapes consistant à :
- associer le pain et la garniture par injection de la garniture à froid dans le pain de sorte à former un produit alimentaire composite compris entre 20 et 70 g, la proportion en poids de garniture étant comprise entre 20 et 40 % ;
- refroidir le produit alimentaire composite formé jusqu'à une température inférieure à 8°C ;
- diminuer l'Aw de la préparation fromagère par adjonction d'au moins un agent dépresseur d'Aw dans la garniture, et en augmentant conjointement l'Aw du pain de telle sorte que le pain et la garniture présentent, dans le produit alimentaire à l'équilibre, une Aw comprise entre 0,94 et 0,98 et un taux d'humidité compris entre 35 et 50 %, ledit produit alimentaire étant directement consommable.

Selon une réalisation possible, on forme le pain à partir d'une pâte de composition telle que, après cuisson, le pain présente un taux d'humidité compris entre 30 et 40 % et/ou on forme une garniture présentant un taux d'humidité compris entre 50 et 60 %.

Selon un deuxième aspect, l'invention concerne un produit alimentaire composite obtenu en mettant en oeuvre le procédé tel que précédemment décrit, comprenant au moins :
- une première partie formée d'un produit de type pain obtenu par cuisson d'une pâte et présentant une Aw supérieure à 0,90 et un taux d'humidité compris entre 25 et 50 % ;
- une deuxième partie formée d'une garniture de type préparation fromagère, présentant une Aw supérieure à 0,95 et un taux d'humidité compris entre 40 et 70 % et au moins un agent dépresseur d'Aw ;
lesdites première et deuxième parties étant associées l'une à l'autre puis refroidies jusqu'à une température inférieure à 8°C, le produit alimentaire étant tel que le pain et la garniture présentent, dans le produit alimentaire à l'équilibre, une Aw comprise entre 0,94 et 0,98 et un taux d'humidité compris entre 35 et 50 %, ledit produit alimentaire étant directement consommable ;
et caractérisé en ce que le poids dudit produit alimentaire composite est compris entre 20 et 70 g, la proportion en poids de garniture étant comprise entre 20 et 40 %.

La pâte peut en outre comprendre des moyens de ralentissement de la rétrogradation de l'amidon et/ou des ingrédients humides aptes à relâcher de l'eau après la cuisson.

La garniture peut comprendre au moins 90% d'un mélange de crème, fromage blanc et lait.

Enfin, selon un troisième aspect, l'invention concerne un ensemble comprenant un tel produit alimentaire composite et un emballage contenant ledit produit alimentaire sous atmosphère modifiée, ledit emballage étant fermé, étanche et constitué d'un matériau hautement barrière à l'eau et à l'oxygène.

D'autres objets et avantages de l'invention apparaîtront au cours de la description qui suit, faite en référence aux dessins annexés dans lesquels :
- la figure 1 est une représentation schématique des différentes étapes du procédé de fabrication d'un produit alimentaire selon l'invention, comprenant du pain et une préparation fromagère, illustrant en outre l'évolution du produit alimentaire au cours du procédé, ledit produit étant représenté en coupe ;
- la figure 2 est une représentation schématique d'une installation pour la mise en oeuvre du procédé de la figure 1 ;
- les figures 3a et 3b sont des diagrammes montrant l'évolution de l'extrait sec du pain et de la préparation fromagère en fonction du temps, dans un produit alimentaire obtenu en mettant en oeuvre le procédé de la figure 1, pour deux types de produits différents ;
- la figure 3c est un diagramme montrant l'évolution de l'Aw du pain et de la préparation fromagère en fonction du temps, dans un produit alimentaire obtenu en mettant en oeuvre le procédé de la figure 1 ;
- les figures 4a à 4c, 4f et 4g illustrent différents produits alimentaires obtenus en mettant en oeuvre le procédé de la figure 1. Les figures 4d et 4e illustrent des produits alimentaires ne mettant pas en oeuvre le procédé de la figure 1.

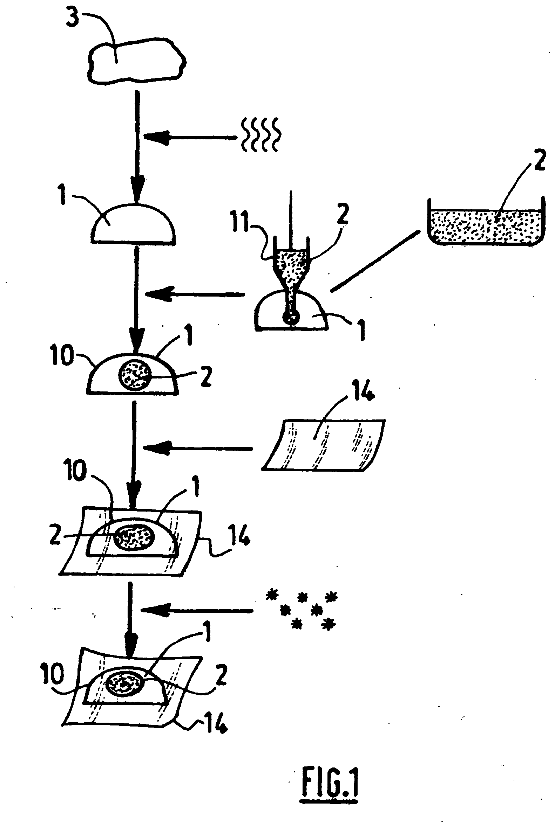

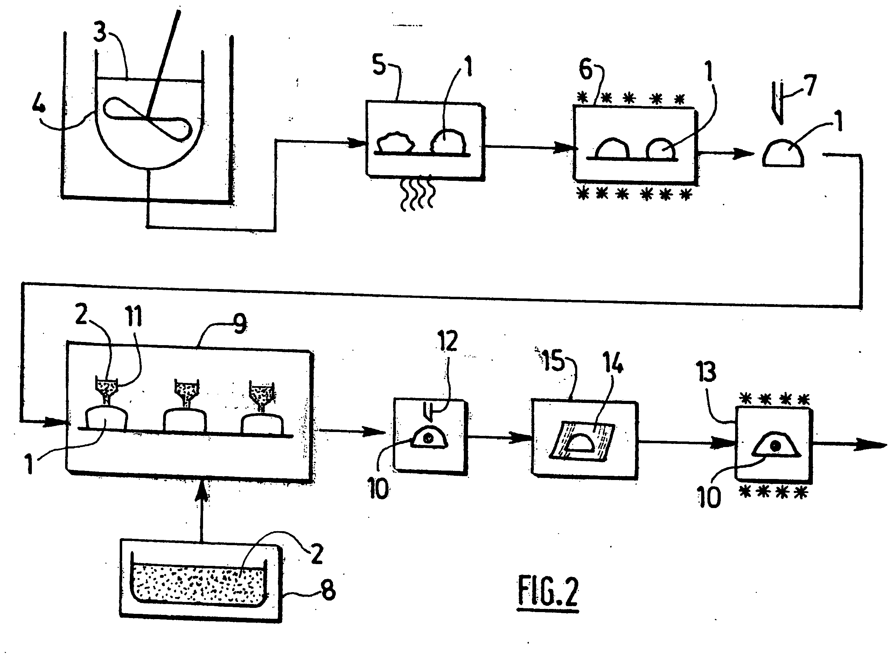

On se réfère tout d'abord aux figures 1 et 2 qui illustrent respectivement le procédé de réalisation du produit alimentaire composite pain + préparation fromagère, et l'installation de fabrication correspondante.

Dans un premier temps, on réalise séparément le pain 1 et la garniture 2 qui seront associés l'un à l'autre dans un deuxième temps.

Le pain 1 est réalisé à partir d'une pâte 3 ou, en variante, à partir d'un pain précuit congelé lui-même issu d'une pâte du même type. La pâte 3 comprend essentiellement de la farine, de l'eau, de la levure, et du sel.

La pâte peut comprendre une farine panifiable d'un seul type. En variante, la farine peut être un mélange de plusieurs farines panifiables (blé, seigle...). Elle peut intégrer tous les additifs habituellement utilisés et autorisés nécessaires (gommes, enzymes, matières grasses, fibres, protéines...) pour conférer au pain le moelleux attendu tout au long de la durée de vie du produit alimentaire et à la température de conservation recommandée dudit produit (4 à 6°C). Cette formulation permet de limiter la rétrogradation de l'amidon, qui est normalement accélérée par le froid, et, en conséquence, de ralentir le phénomène de rassissement du pain 1.

En outre, la farine peut contenir des additifs de conservation comme le propionate, ainsi que des additifs ou ingrédients apportant goût, coloration et décor, dans la mesure où ces apports ne diminuent pas l'hydratation du pain, après cuisson.

La pâte 3 est formulée pour que le pain ait, après cuisson, un taux d'hydratation élevé. A cet effet, la pâte peut également contenir des ingrédients humides aptes à relâcher de l'eau après la cuisson (ex : carotte râpée crue). Ainsi, la démarche à la base de l'invention est d'augmenter l'Aw du pain, pour qu'il soit plus proche de l'Aw de la garniture, et de ce fait limiter la migration d'eau de la garniture vers le pain.

La pâte 3 est celle d'un pain, notamment de type pain de mie ou pain viennois, et non une pâte typique de biscuits ou de gâteaux.

Les différents ingrédients constitutifs de la pâte 3 sont mélangés et travaillés dans un pétrin 4. La pâte 3 est ensuite acheminée vers une installation de cuisson, telle qu'un four 5, pour produire le pain 1. Par exemple, le pain 1 peut être moulé.

Selon la pâte utilisée, on peut obtenir des pains de couleur, de goût, et/ou d'aspect différents (pain blanc, complet ou noir, pains avec marquants du type graines ou son, avec décor...). Il peut s'agir par exemple de, pain de mie ou pain viennois.

Après cuisson, le pain 1 est refroidi dans une enceinte appropriée 6. Le cas échéant, il peut être découpé à la forme et aux dimensions souhaitées par un outil 7 adapté. Par exemple, le pain 1 peut être tranché dans l'épaisseur.

La garniture 2 comprend du fromage ou une préparation fromagère, réalisée dans une installation 8 par tout procédé approprié.

La préparation fromagère est un mélange d'une base laitière (crème, caillé), d'additifs (texturants, protéines de lait, conservateurs) et d'ingrédients supplémentaires (marquants goût et texture), et peut avoir la composition suivante :
- environ 30% de matière grasse ;
- environ 60% d'eau ;
- des protéines de lait ajoutées ;
- du sel ;
- un texturant ;
- éventuellement un conservateur (par exemple sorbate).

En outre, la préparation fromagère contient un ou plusieurs dépresseurs d'Aw, tel que le lactose ou le glycérol, au goût légèrement sucré, dans une proportion de l'ordre de 3%.

Ainsi, la diminution de l'Aw de la préparation fromagère est menée conjointement à l'augmentation de l'Aw du pain, de façon à aboutir à un produit alimentaire encore plus satisfaisant Néanmoins, la diminution de l'Aw de la préparation fromagère est très limitée, par des considérations nutritionnelles et organoleptiques.

La préparation fromagère peut également être foisonnée, moussée, et/ou contenir des aromatisations.

La formulation de la garniture 2 a pour objectif d'obtenir un niveau bas d'eau libre tout en conservant à la garniture la consistance et les qualités organoleptiques d'un fromage de type pâte fraiche.

La garniture 2 comprend essentiellement, voire uniquement, une préparation fromagère, et non par exemple un mélange de fromage et de miettes de pain, ou élément équivalent, qui aurait pour fonction de modifier de façon importante les propriétés d'humidité de la garniture, de sorte à résoudre les problèmes de transfert d'eau.

Une fois le pain 1 et la garniture 2 réalisés, comme il vient d'être décrit, ceux-ci sont associés l'un à l'autre dans une installation de garnissage 9. Les conditions de température utilisées permettent de faciliter le garnissage tout en assurant une conservation optimale du produit.

Selon la présente invention, la garniture 2 est injectée dans le pain 1, de façon à obtenir un produit alimentaire 10 fourré. A cet effet, la garniture 2, à l'état fluide, pâteux ou visqueux, est introduite dans une doseuse-injecteuse 11 qui est insérée dans le pain 1 et déverse à l'intérieur du pain 1 la quantité souhaitée de garniture 2. L'introduction de la garniture 2 peut être effectuée par le côté, le dessus ou le dessous du pain 1 selon les cas.

Selon une variante, non représentée, ne faisant pas partie de la présente invention, la garniture 2 est superposée au pain 1 (dépôt d'une couche de garniture 2 sur le pain 1), de façon à obtenir un produit alimentaire 10 multicouche.

Le cas échéant, le produit alimentaire 10 composite ainsi obtenu est découpé à la forme et aux dimensions souhaitées par un outil 12 adapté.

Ensuite, le produit alimentaire 10 est placé dans un emballage 14 étanche, dans une installation de conditionnement 15.

Enfin, le produit alimentaire 10 est refroidi dans une enceinte appropriée 13, jusqu'à une température de conservation inférieure à 8°C, et de préférence comprise entre 4 et 6°C, puis acheminé vers une zone de stockage avant d'être livré aux magasins où le consommateur pourra l'acheter.

L'emballage 14 peut être une boîte ou un sachet pouvant contenir plusieurs produits alimentaires 10. Les produits alimentaires 10 peuvent également être emballés individuellement. Afin de faciliter la conservation organoleptique et microbiologique du produit alimentaire 10, l'emballage 14 doit répondre à des exigences précises en termes de propriétés de barrière à l'eau et barrière à l'oxygène, l'emballage 14 étant de préférence étanche et constitué d'un matériau hautement barrière à l'eau et à l'oxygène. En outre, la teneur en oxygène résiduel doit demeurer très faible dans l'emballage 14 durant la conservation du produit 10 (par exemple inférieure à 1 %). A cet effet, le produit 10 peut être emballé sous atmosphère modifiée (gaz protecteur de type azote ou azote / CO₂).

Il est à noter que l'installation représentée sur la figure 2 peut comprendre trois unités distinctes, la première destinée à la fabrication du pain, la deuxième destinée à la fabrication de la garniture, et la troisième destinée à l'association pain + garniture, les trois unités n'étant pas nécessairement situées dans le même local.

Le produit peut être directement consommé ou conservé par le consommateur à une température comprise entre 4 et 6°C, pendant au moins 45 jours. En outre, le produit peut être conservé pendant environ 12 heures à température ambiante avant d'être consommé.

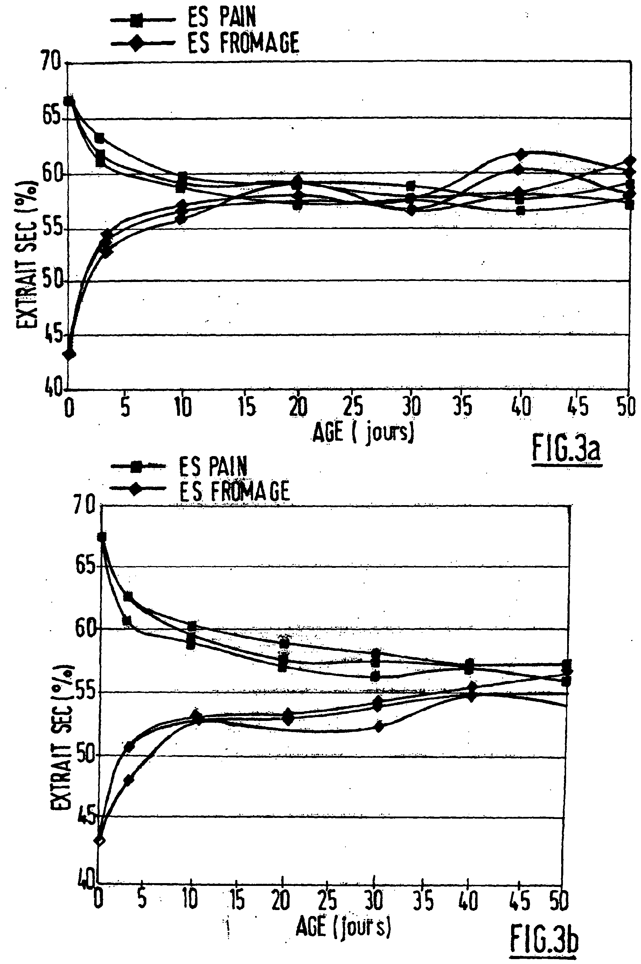

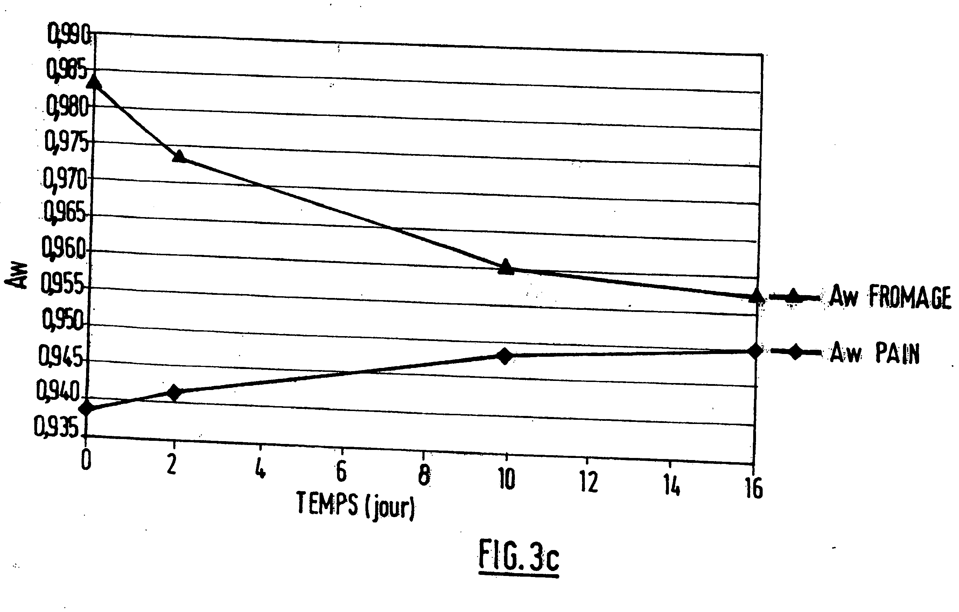

On se rapporte maintenant aux figures 3a, 3b et 3c.

Les figures 3a et 3b représentent l'évolution de l'extrait sec du pain de la préparation fromagère en fonction du temps pour un produit alimentaire composite conservé à une température de l'ordre de 10°C :
- produit alimentaire composite comprenant un pain de type pain brun rectangulaire et un fourrage de type base aromatisée ail et fines herbes (figure 3a) ;
- produit alimentaire composite comprenant un pain blanc rond et un fromage de type base nature.

Les différentes courbes représentées sur une même figure correspondent à différentes formulations de pain (modification des additifs).

Quant à la figure 3c, elle représente l'évolution de l'Aw du pain de la préparation fromagère en fonction du temps, dans le cas d'un produit alimentaire composite comprenant un pain de type pain brun rectangulaire et un fourrage de type base aromatisée ail et fines herbes, à une température de conservation de l'ordre de 10°C.

Les courbes représentées montrent l'évolution et l'équilibrage de l'humidité entre le pain et la préparation fromagère. Le transfert d'eau de la préparation fromagère vers le pain s'effectue jusqu'à un équilibre atteint au bout de 10-15 jours.

Le pain présente, après cuisson et avant association avec la garniture, un taux d'humidité compris entre 30 et 40 % (soit un extrait sec compris entre 60 et 70 %, notamment 67 %), tandis que la garniture présente, avant association avec le pain, un taux d'humidité compris entre 50 et 60 % (soit un extrait sec compris entre 40 et 50 %, notamment 43 %).

Les transferts d'eau existent mais sont limités par la formulation du pain et celle de la préparation fromagère, ce qui permet d'atteindre une texture pain / fromage agréable à l'équilibre et au froid.

Dans des exemples de réalisation, l'évolution des Aw peut être la suivante :

| | Avant association | Dans le produit composite, après 13 jours |
|---|---|---|
| Pain : blanc rond | 0,938 | 0,963 |
| Fromage : base nature | 0,983 | 0,972 |

En particulier, l'évolution des Aw peut être la suivante (cas de la figure 3c) :

| | Avant association | Dans le produit composite, après 13 jours |
|---|---|---|
| Pain : brun rectangulaire | 0,938 | 0,950 |
| Fromage : base aromatisée ail et fines herbes | 0,983 | 0,958 |

Il est à noter que pour parvenir à ce résultat, il n'est pas nécessaire de prévoir une couche d'un produit barrière à l'humidité intercalé entre le pain et le fromage, dont le rôle serait « d'isoler » le pain du fromage, de façon à limiter, voire empêcher, la migration d'eau de l'un à l'autre.

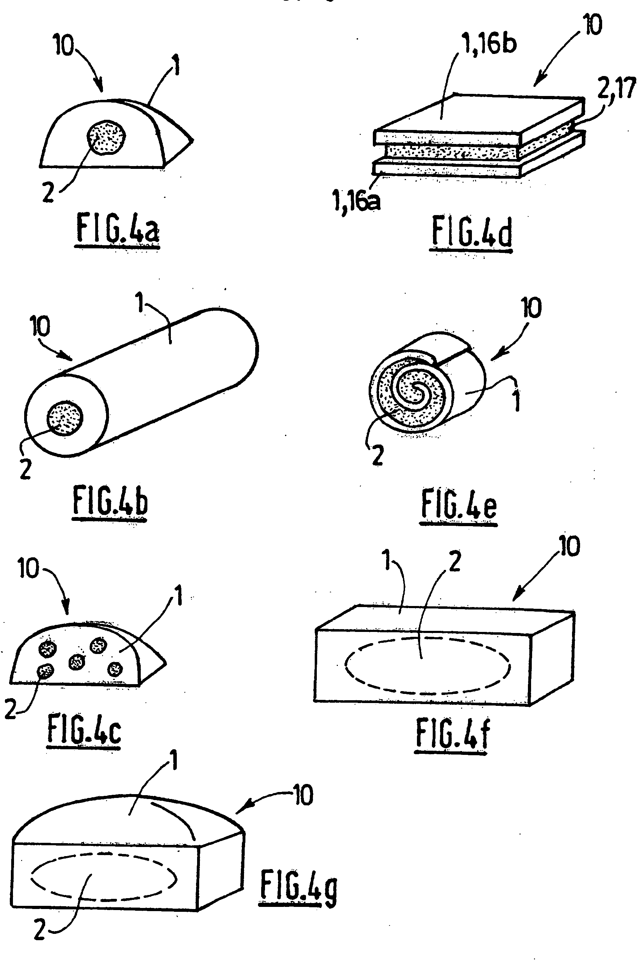

Enfin, on décrit en relation avec les figures 4a à 4g différentes formes possibles du produit alimentaire 10.

Sur les figures 4a et 4c (en vue en perspective et en coupe), le produit alimentaire composite se présente sous la forme d'une boule ronde de pain 1, éventuellement à base aplatie, fourrée d'une ou de plusieurs inclusions de garniture 2. Le pain pourrait également présenter la forme d'une navette allongée, d'un pain sensiblement parallélépipédique (figure 4f) de type mini pain de mie obtenu dans un moule de cuisson fermé, ou encore de type mini cake (figure 4g) obtenu dans un moule de cuisson sans couvercle, de sorte à présenter une forme sensiblement parallélépipédique et une face supérieure bombée.

Sur la figure 4b, le produit alimentaire composite (vu en coupe) se présente sous la forme d'un cylindre de pain 1 fourré d'une inclusion de garniture 2 de forme sensiblement cylindrique. Plusieurs inclusions pourraient être prévues.

Selon une variante ne faisant pas partie de la présente invention, un produit alimentaire composite comprenant une première tranche 16a de pain 1 et, superposée, une couche 17 de garniture 2, est décrit. En particulier, comme illustré sur la figure 4d, ledit produit alimentaire composite comprenant en outre une deuxième tranche 16b de pain 1 disposée de sorte que la garniture 2 soit intercalée entre les première et deuxième tranches (type « sandwich »), est décrit.
Eventuellement, on peut prévoir une structure de type « mille feuilles » alternant plusieurs couches de pain et plusieurs couches de garniture.

Sur la figure 4e ne faisant pas non plus partie de la présente invention, un produit alimentaire composite se présentant sous la forme d'un roulé comprenant une couche de pain 1 et une couche de garniture 2 formant deux spirales imbriquées, est décrit.

Pour les réalisations des figures 4d et 4e, les couches de pain sont préalablement découpées aux dimensions souhaitées, ou bien le produit alimentaire est découpé aux dimensions souhaitées une fois qu'il est réalisé. On présente ci-après 3 exemples de réalisation du produit alimentaire selon l'invention.

### EXEMPLE 1

- type de pain : pain de type mie - viennois blanc, farine de blé
- format du pain : petit pain rond (pâton de 20 à 30g) cuit sur plaque ou en moules
- formulation du pain : utilisation de fibres de légumes (carotte, tomate, potiron...) pour lier l'eau. Ajout possible de minéraux du lait, d'arômes et/ou de marquants (par exemple, arôme et morceaux de jambon...)
- caractéristiques d'hydratation des pains avant utilisation :
   - humidité des pains : 36-37%
   - Aw des pains : 0.95 - 0.96
- formulation de la garniture :
   - crème, fromage blanc et lait : entre 90 et 93%
   - protéines de lait : 2 à 3%
   - sel : 1% environ
   - glycérol : 3% environ
   - épaississants : 0,2 à 0,5%
   - Mélange pasteurisé et refroidi
- caractéristiques de la garniture avant utilisation :
   - taux de matières grasses : 28% mini
   - Aw: 0.98-0.99
   - extrait sec : 42 %mini
   - humidité : 58% maxi
   - taux protéique : 5% mini
   - pH : 4.80 - 5.40
- type d'assemblage : injection de la garniture dans le pain (sur le côté ou le fond du produit)
- proportion pain / fromage : le fromage est incorporé en poids de 20 à 40% du produit fini (poids du produit fini de 30 à 50g).
- mode d'emballage : emballage thermoformé rigide, thermoscellé, sous atmosphère modifiée de type azote ou azote / CO₂ (50/50 ou 80/20 par exemple).
- caractéristiques d'hydratation du produit alimentaire à l'équilibre :
   - équilibrage des humidités à environ 20 jours
   - humidité garniture à l'équilibre : 46%
   - humidité pain à l'équilibre : 43-44%
   - Aw : 0.949 - 0.956

### EXEMPLE 2

- type de pain : pain de type mie - viennois (mie brune). Mélange de farines (dont blé et seigle)
- format du pain : pain de forme rectangulaire cuit en moule fermé ou non (type moule de pain de mie). Poids du pâton de 20 à 40g.
- formulation du pain : utilisation de morceaux (légumes, viande...) non déshydratés permettant de restituer au pain leur humidité lors de la conservation. Ajout possible de marquants intérieurs et externes (graines de type sésame, lin, pavot, tournesol, courges...)
- caractéristiques d'hydratation des pains avant utilisation :
   - humidité des pains : 33-35%
- formulation de la garniture : comme dans l'exemple 1, avec ajout possible d'ingrédients aromatiques de type herbes et épices (de type ail, oignon, persil, herbes de Provence, poivre, basilic, paprika...) ou légumes (tomates, poivrons ...).
- caractéristiques de la garniture avant utilisation : identique à l'exemple 1
- type d'assemblage : injection de la garniture dans le pain (sur le côté ou le fond du produit)
- proportion pain / fromage : le fromage est incorporé en poids de 20 à 40% du produit fini (poids du produit fini de 30 à 60 g).
- mode d'emballage : emballage souple de type sachets scellés hermétiques sous atmosphère modifiée de type azote ou azote / CO₂ (50/50 ou 80/20 par exemple) et éventuellement 2% d'alcool à 70% pulvérisé sur le produit fini.
- caractéristiques d'hydratation du produit alimentaire à l'équilibre :
   - équilibrage des humidités à environ 20 jours
   - humidité garniture à l'équilibre : 42-43%
   - humidité pain à l'équilibre : 42-43%
   - Aw : 0.951 - 0.958

### EXEMPLE 3

- type de pain : pain de type mie - viennois (mie brune). Farine de blé et additifs de couleur et de goût tel que des extraits de malt ou des ferments de seigle désactivés.
- format du pain : pain de forme rectangulaire cuit en moule fermé (type moule de pain de mie). Poids du pâton de 20 à 40 g.
- formulation du pain : Ajout de marquants intérieurs et externes (graines de type sésame, lin, pavot, tournesol, courges...).
- caractéristiques d'hydratation des pains avant utilisation :
   - humidité des pains : 33-35%
- formulation de la garniture : comme dans l'exemple 2
- caractéristiques de la garniture avant utilisation : identique à l'exemple 1
- type d'assemblage : Fourrage par superposition de couches (pain tranché en 2 dans l'épaisseur). 1 couche de pain + 1 couche de garniture + 1 couche de pain ou 1 couche de pain + 1 couche de garniture + enrobage du produit
- proportion pain /fromage : le fromage est incorporé en poids de 20 à 40% du produit fini (poids du produit fini de 30 à 60 g).
- mode d'emballage : emballage souple de type sachets scellés hermétiques sous atmosphère modifiée de type azote.
- caractéristiques d'hydratation du produit alimentaire à l'équilibre :
   - équilibrage des humidités à environ 20 jours
   - humidité garniture à l'équilibre : 42-43%
   - humidité pain à l'équilibre : 42-43%
   - Aw : 0.951 - 0.958

Pour chacun de ces trois exemples, la conservation se fait au froid (4 à 6°C) pendant 45 jours minimum. Il y a conservation des caractéristiques organoleptiques des pains (moelleux, rassissement limité) et de la garniture (humidité, fraîcheur), et stabilité bactériologique.

## Revendications

1. Procédé de fabrication d'un produit alimentaire composite (10), comprenant les étapes consistant à :
- former un produit de type pain (1) par cuisson d'une pâte (3), la composition de la pâte étant telle que, après cuisson, le pain (1) présente une Aw (activité de l'eau) supérieure à 0,90 et un taux d'humidité compris entre 25 et 50 %, et refroidir ledit produit de pain (1) ; et
- former une garniture (2) de type préparation fromagère, présentant une Aw supérieure à 0,95 et un taux d'humidité compris entre 40 et 70 %, et refroidir ladite garniture (2) ;
**caractérisé en ce que**, le procédé comporte en outre des étapes consistant à :
- associer le pain (1) et la garniture (2) par injection de la garniture (2) à froid dans le pain (1) de sorte à former un produit alimentaire (10) composite compris entre 20 et 70 g, la proportion en poids de garniture (2) étant comprise entre 20 et 40 %,
- refroidir le produit alimentaire (10) composite formé jusqu'à une température inférieure à 8°C,
- diminuer l'Aw de la préparation fromagère par adjonction d'au moins un agent dépresseur d'Aw dans la garniture, et en augmentant conjointement l'Aw du pain de telle sorte que le pain (1) et la garniture (2) présentent, dans le produit alimentaire à l'équilibre, une Aw comprise entre 0,94 et 0,98 et un taux d'humidité compris entre 35 et 50 %, ledit produit alimentaire étant directement consommable.

2. Procédé selon la revendication 1, **caractérisé en ce qu'**on forme le pain (1) à partir d'une pâte de composition telle que, après cuisson, le pain (1) présente un taux d'humidité compris entre 30 et 40 %.

3. Procédé selon la revendication 1 ou 2, **caractérisé en ce qu'**on forme une garniture (2) présentant un taux d'humidité compris entre 50 et 60 %.

4. Procédé selon l'une des revendications 1 à 3, **caractérisé en ce qu'**il comprend une étape de découpe du pain (1) avant association avec la garniture (2), et/ou une étape de découpe du produit alimentaire (10).

5. Procédé selon l'une des revendications 1 à 4, **caractérisé en ce que**, après éventuelle découpe, et avant refroidissement, le produit alimentaire (10) est conditionné dans un emballage (14) fermé étanche et constitué d'un matériau hautement barrière à l'eau et à l'oxygène.

6. Procédé selon l'une des revendications 1 à 5, **caractérisé en ce que**, après éventuelle découpe, et avant refroidissement, le produit alimentaire (10) est conditionné dans un emballage (14) fermé sous atmosphère modifiée.

7. Produit alimentaire composite obtenu en mettant en oeuvre le procédé selon l'une des revendications 1 à 6, comprenant au moins :
- une première partie formée d'un produit de type pain (1) obtenu par cuisson d'une pâte et présentant une Aw supérieure à 0,90 et un taux d'humidité compris entre 25 et 50%;
- une deuxième partie formée d'une garniture (2) de type préparation fromagère, présentant une Aw supérieure à 0,95 et un taux d'humidité compris entre 40 et 70 % et au moins un agent dépresseur d'Aw;
lesdites première et deuxième parties étant associées l'une à l'autre puis refroidies jusqu'à une température inférieure à 8°C, le produit alimentaire (10) étant tel que le pain (1) et la garniture (2) présentent, dans le produit alimentaire à l'équilibre, une Aw comprise entre 0,94 et 0,98 et un taux d'humidité compris entre 35 et 50 %, ledit produit alimentaire étant directement consommable ;
et **caractérisé en ce que** le poids dudit produit alimentaire composite est compris entre 20 et 70 g, la proportion en poids de garniture (2) étant comprise entre 20 et 40 %.

8. Produit selon la revendication 7 **caractérisé en ce que** ledit agent dépresseur d'Aw comprend du lactose et/ou du glycérol.

9. Produit alimentaire composite selon l'une des revendications 8 à 9, **caractérisé en ce que** le pain (1) présente, après cuisson et avant association avec la garniture (2), un taux d'humidité compris entre 30 et 40 %.

10. Produit alimentaire composite selon l'une des revendications 7 à 9, **caractérisé en ce que** le pain (1) est de type pain de mie ou pain viennois.

11. Produit alimentaire composite selon l'une des revendications 7 à 10, **caractérisé en ce que** le pain (1) est formé essentiellement à partir d'une farine panifiable ou d'un mélange de farines panifiables, d'eau, de levure, et de sel.

12. Produit alimentaire composite selon l'une des revendications 7 à 11, **caractérisé en ce que** la pâte comprend en outre des moyens de ralentissement de la rétrogradation de l'amidon et/ou des ingrédients humides aptes à relâcher de l'eau après la cuisson.

13. Produit alimentaire composite selon l'une des revendications 7 à 12, **caractérisé en ce que** la garniture (2) présente, avant association avec le pain (1), un taux d'humidité compris entre 50 et 60 %.

14. Produit alimentaire composite selon l'une des revendications 7 à 13, **caractérisé en ce que** la garniture (2) comprend au moins 90% d'un mélange de crème, fromage blanc et lait.

15. Produit alimentaire composite selon l'une des revendications 7 à 14, **caractérisé en ce que** la garniture (2) présente la composition suivante :
- crème, fromage blanc et lait : entre 90 et 93%
- protéines de lait : 2 à 3%
- sel : 1% environ
- glycérol : 3% environ
- épaississants : 0,2 à 0,5%.

16. Produit alimentaire composite selon l'une des revendications 7 à 15, **caractérisé en ce que** la garniture (2) comprend en outre des ingrédients aromatiques et/ou des légumes.

17. Produit alimentaire composite selon l'une des revendications 7 à 16, **caractérisé en ce qu'**il se présente sous la forme d'une boule ronde de pain (1), d'une navette de pain (1) allongée, d'un mini pain de mie sensiblement parallélépipédique ou d'un mini cake sensiblement parallélépipédique présentant une face supérieure bombée, ledit produit alimentaire étant fourré d'une ou de plusieurs inclusions de garniture (2).

18. Produit alimentaire composite selon l'une des revendications 7 à 16, **caractérisé en ce qu'**il se présente sous la forme d'un cylindre de pain (1) fourré d'une ou de plusieurs inclusions de garniture (2) de forme sensiblement cylindrique.

19. Ensemble comprenant un produit alimentaire (10) composite selon l'une des revendications 7 à 18 et un emballage (14) contenant ledit produit alimentaire sous atmosphère modifiée, ledit emballage étant fermé, étanche et constitué d'un matériau hautement barrière à l'eau et à l'oxygène.

## Patentansprüche

1. Verfahren zur Herstellung eines zusammengesetzten Lebensmittelprodukts (10), umfassend die folgenden Schritte:
- Herstellen eines Produkts des Brottyps (1) durch Backen eines Teigs (3), wobei die Zusammensetzung des Teigs derart ist, dass nach dem Backen das Brot (1) eine WA (Wasseraktivität) von mehr als 0,90 und einen Feuchtigkeitsgehalt zwischen 25 und 50% aufweist, und Abkühlen des Brotprodukts (1); und
- Herstellen eines Belags (2) des Typs einer Käsezubereitung mit einer WA von mehr als 0,95 und einem Feuchtigkeitsgehalt zwischen 40 und 70% und Abkühlen des Belags (2);
**dadurch gekennzeichnet, dass** das Verfahren außerdem die folgenden Schritte umfasst:
- Zusammenfügen des Brotes (1) und des Belags (2) durch Einspritzen des Belags (2) im kalten Zustand in das Brot (1), um ein zusammengesetztes Lebensmittelprodukt (10) von zwischen 20 und 70 g herzustellen, wobei der Gewichtsanteil des Belags (2) zwischen 20 und 40% beträgt,
- Abkühlen des hergestellten zusammengesetzten Lebensmittelprodukts (10) bis auf eine Temperatur unterhalb von 8°C,
- Verringern der WA der Käsezubereitung durch Beimengung mindestens eines AW-Senkungsmittels in dem Belag und durch gleichzeitiges Erhöhen der WA des Brots derart, dass das Brot (1) und der Belag (2) in dem Lebensmittelprodukt im Gleichgewicht eine WA zwischen 0,94 und 0,98 und einen Feuchtigkeitsgehalt zwischen 35 und 50% aufweisen, wobei das Lebensmittelprodukt direkt verzehrbar ist.

2. Verfahren nach Anspruch 1, **dadurch gekennzeichnet, dass** man das Brot (1) aus einem Teig mit einer derartigen Zusammensetzung herstellt, dass nach dem Backen das Brot (1) einen Feuchtigkeitsgehalt zwischen 30 und 40% aufweist.

3. Verfahren nach Anspruch 1 oder 2, **dadurch gekennzeichnet, dass** man einen Belag (2) herstellt, der einen Feuchtigkeitsgehalt zwischen 50 und 60% aufweist.

4. Verfahren nach einem der Ansprüche 1 bis 3, **dadurch gekennzeichnet, dass** es einen Schritt des Schneidens des Brots (1) vor dem Zusammenfügen mit dem Belag (2) und/oder einen Schritt des Schneidens des Lebensmittelprodukts (10) umfasst.

5. Verfahren nach einem der Ansprüche 1 bis 4, **dadurch gekennzeichnet, dass** nach dem optionalen Schneiden und vor dem Abkühlen das Lebensmittelprodukt (10) in einer dicht verschlossenen Verpackung (14) verpackt wird, die aus einem Material besteht, das eine hochgradig wasser- und sauerstoffdichte Barriere darstellt.

6. Verfahren nach einem der Ansprüche 1 bis 5, **dadurch gekennzeichnet, dass** nach dem optionalen Schneiden und vor dem Abkühlen das Lebensmittelprodukt (10) in einer Verpackung (14) verpackt wird, die unter einer modifizierten Atmosphäre verschlossen wird.

7. Zusammengesetztes Lebensmittelprodukt, das mittels Durchführen des Verfahren nach einem der Ansprüche 1 bis 6 erhalten wird und mindestens Folgendes umfasst:
- einen ersten Teil, der von einem Produkt des Brottyps (1) gebildet wird, das durch Backen eines Teigs erhalten wird und eine WA von mehr als 0,90 und einen Feuchtigkeitsgehalt zwischen 25 und 50% aufweist;
- einen zweiten Teil, der von einem Belag (2) des Typs einer Käsezubereitung mit einer WA von mehr als 0,95 und einem Feuchtigkeitsgehalt zwischen 40 und 70% und mindestens einem WA-Senkungsmittel gebildet wird;
wobei der erste und der zweite Teil miteinander vereinigt und anschließend bis auf eine Temperatur unterhalb von 8°C abgekühlt werden, wobei das Lebensmittelprodukt (10) derart ist, dass das Brot (1) und der Belag (2) in dem Lebensmittelprodukt im Gleichgewicht eine WA zwischen 0,94 und 0,98 und einen Feuchtigkeitsgehalt zwischen 35 und 50% aufweisen, wobei das Lebensmittelprodukt direkt verzehrbar ist; und **dadurch gekennzeichnet, dass** das Gewicht des zusammengesetzten Lebensmittelprodukts zwischen 20 und 70 g beträgt, wobei der Gewichtsanteil des Belags (2) zwischen 20 und 40% beträgt,

8. Produkt nach Anspruch 7, **dadurch gekennzeichnet, dass** das WA-Senkungsmittel Lactose und/oder Glycerin umfasst.

9. Zusammengesetztes Lebensmittelprodukt nach einem der Ansprüche 8 bis 9, **dadurch gekennzeichnet, dass** das Brot (1) nach dem Backen und vor dem Zusammenfügen mit dem Belag (2) einen Feuchtigkeitsgehalt zwischen 30 und 40% aufweist.

10. Zusammengesetztes Lebensmittelprodukt nach einem der Ansprüche 7 bis 9, **dadurch gekennzeichnet, dass** das Brot (1) vom Typ eines Kastenbrots oder einer Feinbackware ist.

11. Zusammengesetztes Lebensmittelprodukt nach einem der Ansprüche 7 bis 10, **dadurch gekennzeichnet, dass** das Brot (1) im Wesentlichen aus einem Backmehl oder einem Gemisch von Backmehlen, Wasser, Hefe und Salz hergestellt ist.

12. Zusammengesetztes Lebensmittelprodukt nach einem der Ansprüche 7 bis 11, **dadurch gekennzeichnet, dass** der Teig außerdem Mittel zur Verlangsamung der Retrogradation der Stärke und/oder feuchte Zutaten, die nach dem Backen Wasser freisetzen können, umfasst.

13. Zusammengesetztes Lebensmittelprodukt nach einem der Ansprüche 7 bis 12, **dadurch gekennzeichnet, dass** der Belag (2) vor dem Zusammenfügen mit dem Brot (1) einen Feuchtigkeitsgehalt zwischen 50 und 60% aufweist.

14. Zusammengesetztes Lebensmittelprodukt nach einem der Ansprüche 7 bis 13, **dadurch gekennzeichnet, dass** der Belag (2) mindestens 90% eines Gemischs von Sahne, Speisequark und Milch enthält.

15. Zusammengesetztes Lebensmittelprodukt nach einem der Ansprüche 7 bis 14, **dadurch gekennzeichnet, dass** der Belag (2) die folgende Zusammensetzung aufweist:
- Sahne, Speisequark und Milch: zwischen 90 und 93%
- Milchproteine: 2 bis 3%
- Salz: etwa 1%
- Glycerin: etwa 3%
- Verdickungsmittel: 0,2 bis 0,5%.

16. Zusammengesetztes Lebensmittelprodukt nach einem der Ansprüche 7 bis 15, **dadurch gekennzeichnet, dass** der Belag (2) außerdem Aromastoffe und/oder Gemüse umfasst.

17. Zusammengesetztes Lebensmittelprodukt nach einem der Ansprüche 7 bis 16, **dadurch gekennzeichnet, dass** es in Form einer runden Kugel aus Brot (1), eines länglichen Schiffchens aus Brot (1), eines im Wesentlichen quaderförmigen Mini-Kastenbrots oder eines im Wesentlichen quaderförmigen Mini-Cake mit einer gewölbten Oberseite vorliegt, wobei das Lebensmittelprodukt mit einer oder mehreren Einschlüssen von Belag (2) gefüllt ist.

18. Zusammengesetztes Lebensmittelprodukt nach einem der Ansprüche 7 bis 16, **dadurch gekennzeichnet, dass** es in Form eines Zylinders aus Brot (1) vorliegt, der mit einem oder mehreren Einschlüssen von Belag (2) mit im Wesentlichen zylindrischer Form gefüllt ist.

19. Zusammenstellung, umfassend ein zusammengesetztes Lebensmittelprodukt (10) nach einem der Ansprüche 7 bis 18 und eine Verpackung (14), die das Lebensmittelprodukt unter modifizierter Atmosphäre enthält, wobei die Verpackung verschlossen, dicht und aus einem Material hergestellt ist, das eine hochgradig wasser- und sauerstoffdichte Barriere bildet.

## Claims

1. Method for the preparation of a composite food product (10), comprising the steps consisting of:
- forming a bread-type product (1) by baking a dough (3), the composition of the dough being such as, after baking, the bread (1) has a Aw (water activity) greater than 0.90 and a moisture content of between 25 and 50%, and cooling said bread product (1); and
- forming a cheese preparation type filling (2), having an Aw greater than 0.95 and a moisture content of between 40 and 70%, and cooling said filling (2); **characterized in that** the method further comprises steps consisting of:
- combining the bread (1) and the filling (2) by cold injection of the filling (2) in the bread (1) so as to form a composite food product (10) of between 20 and 70g, the proportion by weight of filling (2) being between 20 and 40%;
- cooling the formed composite food product (10) to a temperature below 8°C;
- reducing the Aw of the cheese preparation by adding at least one depressant agent of Aw in the filling, and by jointly increasing the Aw of the bread so that the bread (1) and the filling (2) have, in the food product at equilibrium, an Aw of between 0.94 and 0.98 and a moisture content of between 35 and 50%, said food product being directly edible.

2. Method according to claim 1, **characterized in that** the bread (1) is formed from a dough of such a composition that, after baking, the bread (1) has a moisture content of between 30 and 40%.

3. Method according to claim 1 or 2, **characterized in that** a filling (2) is formed having a moisture content of between 50 and 60%.

4. Method according to anyone of claims 1 to 3, **characterized in that** it comprises a step of cutting the bread (1) before association with the filling (2), and/or a step of cutting the food product (10).

5. Method according to anyone of claims 1 to 4, **characterized in that**, after possible cutting, and before cooling, the food product (10) is conditioned in a closed, sealed package (14) and made of a material that is highly resistant to water and oxygen.

6. Method according to anyone of claims 1 to 5, **characterized in that**, after possible cutting, and before cooling, the food product (10) is conditioned in a closed package (14) under a modified atmosphere.

7. Composite food product obtained by carrying out the method according to anyone of claims 1 to 6, comprising at least:
- a first part formed of a bread-type product (1) obtained by baking of a dough and having an Aw greater than 0.90 and a moisture content of between 25 and 50%;
- a second part formed of a cheese preparation type filling (2) having an Aw greater than 0.95 and a moisture content of between 40 and 70% and at least one depressant agent of Aw;
said first and second parts being associated with each other then cooled to a temperature below 8°C, the food product (10) being such that the bread (1) and the filling (2) have, in the food product at equilibrium, an Aw of between 0.94 and 0.98 and a moisture content of between 35 and 50%, said food product being directly edible;
and **characterized in that** the weight of said composite food product is between 20 and 70g, the proportion in weight of filling (2) being between 20 and 40%.

8. Product according to claim 7, **characterized in that** said depressant agent of Aw comprises lactose and/or glycerol.

9. Composite food product according to either one of claims 8 and 9, **characterized in that** the bread (1) has, after baking and before association with the filling (2), a moisture content of between 30 and 40%.

10. Composite food product according to anyone of claims 7 to 9, **characterized in that** the bread (1) is of the sandwich bread or Viennese bread type.

11. Composite food product according to anyone of claims 7 to 10, **characterized in that** the bread (1) is formed essentially from a bread-making flour or a mixture of bread-making flours, water, yeast and salt.

12. Composite food product according to anyone of claims 7 to 11, **characterized in that** the dough further comprises means for slowing the demotion of starch and/or moist ingredients capable of releasing water after baking.

13. Composite food product according to anyone of claims 7 to 12, **characterized in that** the filling (2) has, before association with the bread (1), a moisture content of between 50 and 60%.

14. Composite food product according to anyone of claims 7 to 13, **characterized in that** the filling (2) has at least 90% of a mixture of cream, cottage cheese and milk.

15. Composite food product according to anyone of claims 7 to 14, **characterized in that** the filling (2) has the following composition:
- cream, cottage cheese and milk: between 90 and 93%
- milk proteins: 2 to 3%
- salt: about 1%
- glycerol: about 3%
- thickeners: 0.2 to 0.5%.

16. Composite food product according to anyone of claims 7 to 15, **characterized in that** the filling (2) further comprises aromatic ingredients and/or vegetables.

17. Composite food product according to anyone of claims 7 to 16, **characterized in that** it is in the form of a round ball of bread (1), an elongated bread (1) shuttle, a substantially parallelepiped mini sandwich bread or a substantially parallelepiped mini cake having a curved upper surface, said food product being filled with one or more filling (2) inclusions.

18. Composite food product according to anyone of claims 7 to 16, **characterized in that** it is in the form of a bread (1) cylinder filled with one or more substantially cylindrical filling (2) inclusions.

19. Assembly comprising a composite food product (1) according to anyone of claims 7 to 18 and a package (14) comprising said food product under a modified atmosphere, said package being closed, sealed and made of a material highly resistant to water and oxygen.
